# EUROPEAN PATENT SPECIFICATION

(11) **EP 1 272 922 B1**
(45) Date of publication and mention of the grant of the patent: **14.06.2006**
(21) Application number: 01921577.1
(22) Date of filing: 17.04.2001
(51) Int. Cl.: G06F 3/12

(54) **DIGITAL DOCUMENT PROCESSING**
DIGITALE DOKUMENTVERARBEITUNG
TRAITEMENT DE DOCUMENTS NUMERIQUES

(30) Priority: 14.04.2000 GB 0009129; 31.10.2000 US 703502
(43) Date of publication of application: 08.01.2003
(60) Divisional application: 04013996.6
(73) Proprietor: Picsel (Research) Limited, Paisley PA4 8XE (GB)
(72) Inventor: ANWAR, Majid, Picsel Technologies Limited, King's Inch Road, Pailsey PA4 8XE (GB)
(74) Representative: Cooper, John
(86) International application number: PCT/GB2001/001678
(87) International publication number: WO 2001/079984

(56) References cited:
- EP-A- 0 860 769
- WO-A-98/37506
- US-A- 5 754 348

## Description

### Field of the Invention

The invention relates to data processing systems. More particularly, the invention relates to methods and systems for processing "digital documents" (as defined herein) and to devices incorporating such methods and systems. In general terms, the invention is concerned with generating an output representation of a source document; e.g. as a visual display or as hardcopy.

### Background to the Invention

As used herein, the term "digital document" is used to describe a digital representation of any type of data processed by a data processing system which is intended, ultimately, to be output in some form, in whole or in part, to a human user, typically by being displayed or reproduced visually (e.g. by means of a visual display unit or printer), or by text-to-speech conversion, etc. A digital document may include any features capable of representation, including but not limited to the following: text; graphical images; animated graphical images; full motion video images; interactive icons, buttons, menus or hyperlinks. A digital document may also include non-visual elements such as audio (sound) elements.

Data processing systems, such as personal computer systems, are typically required to process "digital documents", which may originate from any one of a number of local or remote sources and which may exist in any one of a wide variety of data formats ("file formats"). In order to generate an output version of the document, whether as a visual display or printed copy, for example, it is necessary for the computer system to interpret the original data file and to generate an output compatible with the relevant output device (e.g. monitor, or other visual display device, or printer). In general, this process will involve an application program adapted to interpret the data file, the operating system of the computer, a software "driver" specific to the desired output device and, in some cases (particularly for monitors or other visual display units), additional hardware in the form of an expansion card.

This conventional approach to the processing of digital documents in order to generate an output is inefficient in terms of hardware resources, software overheads and processing time, and is completely unsuitable for low power, portable data processing systems, including wireless telecommunication systems, or for low cost data processing systems such as network terminals, etc. Other problems are encountered in conventional digital document processing systems, including the need to configure multiple system components (including both hardware and software components) to interact in the desired manner, and inconsistencies in the processing of identical source material by different systems (e.g. differences in formatting, colour reproduction, etc). In addition, the conventional approach to digital document processing is unable to exploit the commonality and/or re-usability of file format components.

WO-A-97/34240 teaches converting a "structured hypermedia document" (e.g. an SGML document) into a more compact data format ("compact tree" or "CT") for use during electronic storage, transmission and presentation of the document in a networked computer, to reduce network traffic in a client-server environment. The CT data format disclosed therein describes the structure of the original document in terms of generic objects defining a plurality of data types and parameters defining properties of specific instances of generic objects, separately from the document content. The CT data is converted by a CT processor in a client computer into a formatted document that can be processed by the client computer to generate an output display or the like.

### Summary of the Invention

It is an object of the present invention to provide digital document processing methods and systems, and devices incorporating such methods and systems, which obviate or mitigate the aforesaid disadvantages of conventional methods and systems.

The invention, in its various aspects, is defined in the Claims appended hereto.

The systems and methods described herein include systems that employ an adaptable front end for

Although WO-A-97/34240 develops an example wherein the SGML syntax is used, that document mentions that structured document syntaxes other than SGML may be supported, either by handling non SGML documents directly or by first translating non SGML documents into the SGML syntax. determining a file-type to associate with the output from a source application and for processing the output, as a function of the file type, to generate a display list that is representative of objects and shapes that represent components within the visual representation of the data. The display list is then processed by a rendering engine, which optionally may be located on an embedded device.
The rendering engine processes the components contained within the display list to render an image of the source application's output that may be presented on the display of the device. As will be described below, the adaptable front end determines the file structure of the source being processed, thereby providing a device that may operate with a plurality of different file types and source applications.

Additionally and optionally, the rendering engines described herein will provide for progressive rendering of images on the display of the device. This provides a visual display interface that will render images more quickly by having finer features within the representation appear subsequent to the more easily rendered features within the presentation. Additionally, as the system described herein may break a document down into component objects, each of the objects may be processed separately including processing objects with special effects, such as shading, colouring and transparency, thereby providing a layered look to images presented by the system described herein.

In a first aspect, the systems and methods described herein relate to a digital document processing system as defined in claim 1.

In a second aspect, the invention relates to a graphical user interface for a data processing system in which interactive visual displays employed by the user interface are generated by means of a digital document processing system in accordance with the first aspect of the invention and to data processing systems incorporating such a graphical user interface.

In further aspects, the invention relates to various types of device incorporating a digital document processing system in accordance with the first aspect of the invention, including hardware devices, data processing systems and peripheral devices.

In still another aspect, the invention relates to systems and devices according to the first and further aspects incorporating a graphical user interface having one or more of a number of features, as defined in claims 34 and 35.

Embodiments of the invention will now be described, by way of example only, with reference to the accompanying drawing.

### Brief Description of the Drawing

The foregoing and other objects and advantages of the invention will be appreciated more fully from the following further description thereof, with reference to the accompanying drawings, wherein:
Fig. 1 is a functional block diagram illustrating an embodiment of a digital document processing system in accordance with the present invention;
Fig. 2 is a functional block diagram that shows the system of the invention in more detail; and
Fig. 3 is a functional block diagram further illustrating an embodiment of a digital document processing system in accordance with the present invention.

### Detailed Description of the Preferred Embodiments

The systems and methods described herein will now be described with reference to several illustrative applications and embodiments, including embodiments that are well suited for identifying a file type associated with a source application's output, such as a document produced by a word processing application, to generate a representation of the visual display of that output, wherein the representation is presented in an abstract form that may be rendered by a rendering engine adapted for a particular platform, such as a hand-held device. However, the systems and methods described herein are merely illustrative of certain embodiments of the invention, and are not to be understood as limiting in any way.

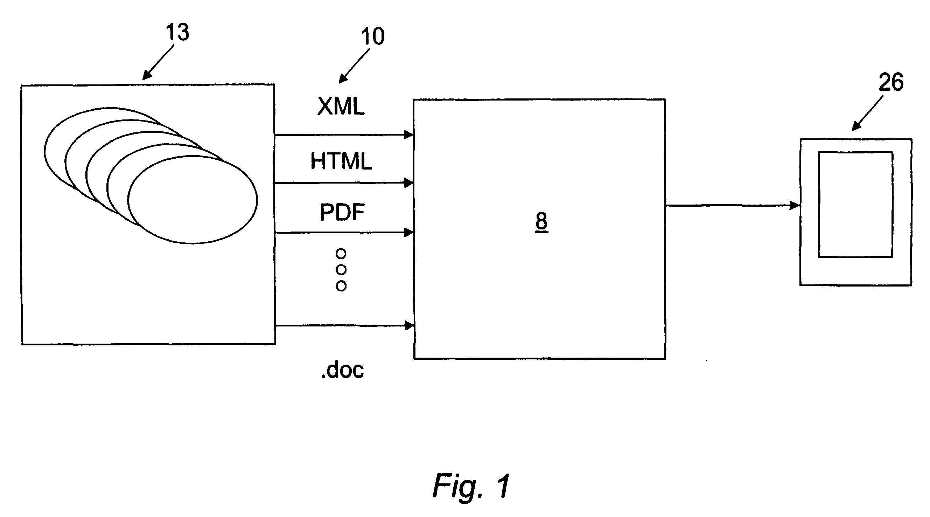

Turning now to Fig. 1, one system 8 according to the invention is depicted. Specifically, Fig. 1 depicts the system 8, a data processor 13 having a plurality of executing processes, a plurality of output source streams 10 and an output display 26. The data processor 13 can be any suitable data processing platform including a conventional data processing platform, such as a PC workstation or a server. The processes executing on the data processor may be any application that produces an output source that is to be, or may be, rendered on a display. For example, the depicted processes may include word processing programs that generate .doc files, which may be presented as pages on a visual display. Similarly, the processes 13 may include a web server that delivers HTML, XML, streaming multi-media, or PDF files for display by a browser. The depicted output target device 26 may be any suitable device that can act as a display for the source being delivered by the processes.

Accordingly, Fig. 1 depicts that the system 8 of the invention can couple to output sources of a plurality of different applications, as well as output sources that differ in format. The system 8 can identify the format of each source and process the source as a function of its format. The processed source can be presented in a format suitable for presentation on the display of the target device 26.

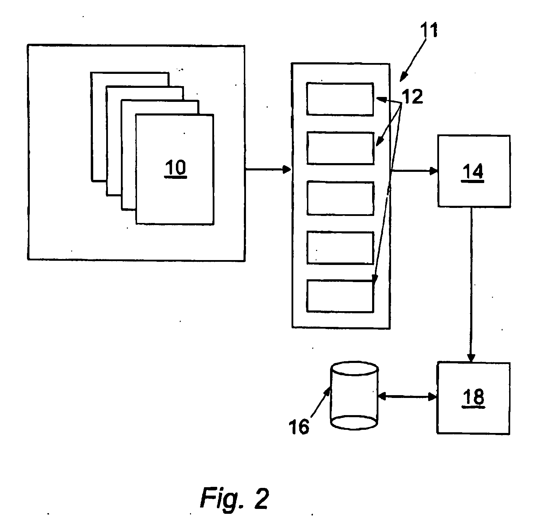

Fig. 2 depicts in more detail the system 8 of Fig. 1. specifically, Fig. 2 depicts a plurality of application sources 10, the system 8 that includes an input module 11, or front end, a plurality of document agent processes 12, a display list 14 representative of an internal representation of the visual image that is associated with the application source 10 being processed, a rendering module 18 and a library of generic object types 16.

The adaptive front end 11 includes a plurality of document agents 12. Each document agent 12 can be a software or hardware module that is capable of receiving a stream, such as a Unix stream or a Java stream, that is associated with an application source 10. The document agent 12 can sort through the stream to determine whether the agent 12 recognises the format of that stream. If the format is recognised as belonging to that agent 12, the agent 12 can begin processing fully the input stream. The processing of an output source can include parsing the source to identify tokens within the source representative of the image that is to be displayed. These tokens can include test, fonts, bitmaps and other such identifiers.

In the depicted embodiment, the front end 11 includes a plurality of different document agents, each being associated with a different format output source. By providing a plurality of document agents and by allowing each document agent 12 to examine the output source that is to be processed, the system of Fig. 2 is a pluripotent processing engine that can display the output source of multiple files.

As the document agent 12 processes the output stream, the agent 12 builds a new data file, the display list 14, that encodes the visual image represented by the output source. The display list 14 comprises an internal representation of the visual image. The display list 14 can be passed to the rendering engine 18, which will process the information within the display list to create the visual image on the target output device 26. To this end, the document agent 12 builds the internal representation of the visual image, by creating a file that includes a set of pointers to a library of known object types. When the rendering engine 18 operates, the library 16 of known object types is referenced and the objects retrieved from the library 16 for display on the target output device 26.

Although Figs. 1 and 2 graphically depict the system 8 as comprising functional block elements, it will be apparent to one of ordinary skill in the art that these elements can be realised as computer programs or portions of computer programs that are capable of running on a data processor platform, such as the target device 26, to thereby configure the data processor as a system according to the invention.
These programs can be realised as software components operating on a conventional data processing system such as a Unix workstation, can be implemented as a C language computer program, or a computer program written in any high level language including C++, Fortran, Java or Basic.
Additionally, in an embodiment where microcontrollers or DSPs are employed, the systems described herein can be realised as a computer program written in microcode or written in a high level language and compiled down to microcode that can be executed on the platform employed.

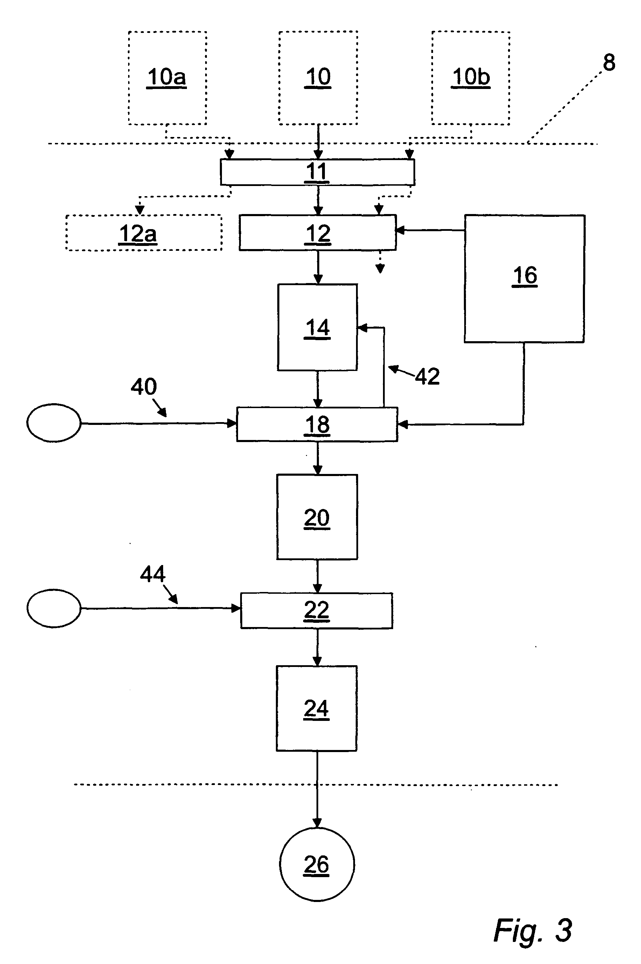

Referring now to Fig. 3 of the the drawings, a digital document processing system 8 embodying the invention, and its method of operation, is illustrated in more detail.

In general terms, the system 8 will process a source document 10 comprising a data file in a known format. The input to the system 8 is a bytestream comprising the content of the source document. An input module 11 identifies the file format of the source document on the basis of any one of a variety of criteria, such as an explicit file-type identification within the document, from the file name (particularly the file name extension), or from known characteristics of the content of particular file types. The bytestream is input to a "document agent" 12, specific to the file format of the source document. The document agent 12 is adapted to interpret the incoming bytestream and to convert it into a standard format employed by the system 8, resulting in an internal representation 14 of the source data in a "native" format suitable for processing by the system 8. The system 8 will generally include a plurality of different document agents 12, each adapted to process one of a corresponding plurality of predetermined file formats.

The system 8 may also be applied to input received from an input device such as a digital camera or scanner. In this case the input bytestream may originate directly from the input device, rather from a "source document" as such. However, the input bytestream will still be in a predictable data format suitable for processing by the system and, for the purposes of the invention, input received from such an input device may be regarded as a "source document".

The document agent 12 employs a library 16 of standard objects to generate the internal representation 14, which describes the content of the source document in terms of a collection of generic objects whose types are as defined in the library 16, together with parameters defining the properties of specific instances of the various generic objects within the document. It will be understood that the internal representation may be saved/stored in a file format native to the system and that the range of possible source documents 10 input to the system 8 may include documents in the system's native file format. It is also possible for the internal representation 14 to be converted into any of a range of other file formats if required, using suitable conversion agents (not shown).

The generic objects employed in the internal representation 14 will typically include: text, bitmap graphics and vector graphics (which may or may not be animated and which may be two- or three-dimensional), video, audio, and a variety of types of interactive object such as buttons and icons. The parameters defining specific instances of generic objects will generally include dimensional co-ordinates defining the physical shape, size and location of the object and any relevant temporal data for defining objects whose properties vary with time (allowing the system to deal with dynamic document structures and/or display functions). For text objects, the parameters will normally also include a font and size to be applied to a character string. Object parameters may also define other properties, such as transparency.

The format of the internal representation 14 separates the "structure" (or "layout") of the documents, as described by the object types and their parameters, from the "content" of the various objects; e.g. the character string (content) of a text object is separated from the dimensional parameters of the object; the image data (content) of a graphic object is separated from its dimensional parameters. This allows document structures to be defined in a very compact manner and provides the option for content data to be stored remotely and to be fetched by the system only when needed.

The internal representation 14 describes the document and its constituent objects in terms of "high-level" descriptions.

The internal representation data 14 is input to a parsing and rendering module 18 which generates a context-specific representation 20 or "view" of the document represented by the internal representation 14. The required view may be of the whole document or of part(s) (subset(s)) thereof. The parser/renderer 18 receives view control inputs 40 which define the viewing context and any related temporal parameters of the specific document view which is to be generated. For example, the system may be required to generate a zoomed view of part of a document, and then to pan or scroll the zoomed view to display adjacent portions of the document. The view control inputs 40 are interpreted by the parser/renderer 18 in order to determine which parts of the internal representation are required for a particular view and how, when and for how long the view is to be displayed.

The context-specific representation/view 20 is expressed in terms of primitive shapes and parameters.

The parser/renderer 18 may also perform additional pre-processing functions on the relevant parts of the internal representation 14 when generating the required view 20 of the source document 10. The view representation 20 is input to a shape processor module 22 for final processing to generate a final output 24, in a format suitable for driving an output device 26 (or multiple output devices), such as a display device or printer.

The pre-processing functions of the parser/renderer 18 may include colour correction, resolution adjustment/enhancement and anti-aliasing. Resolution enhancement may comprise scaling functions which preserve the legibility of the content of objects when displayed or reproduced by the target output device. Resolution adjustment may be context-sensitive; e.g. the display resolution of particular objects may be reduced while the displayed document view is being panned or scrolled and increased when the document view is static.

There may be a feedback path 42 between the renderer/parser 18 and the internal representation 14; e.g. for the purpose of triggering an update of the content of the internal representation 14, such as in the case where the document 10 represented by the internal representation comprises a multi-frame animation.

The output representation 20 from the parser/renderer 18 expresses the document in terms of "primitive" objects. For each document object, the representation 20 preferably defines the object at least in terms of a physical, rectangular boundary box, the actual shape of the object bounded by the boundary box, the data content of the object, and its transparency.

The shape processor 22 interprets the representation 20 and converts it into an output frame format 24 appropriate to the target output device 26; e.g. a dot-map for a printer, vector instruction set for a plotter, or bitmap for a display device. An output control input 44 to the shape processor 22 defines the necessary parameters for the shape processor 22 to generate output 24 suitable for a particular output device 26.

The shape processor 22 preferably processes the objects defined by the view representation 20 in terms of "shape" (i.e. the outline shape of the object), "fill" (the data content of the object) and "alpha" (the transparency of the object), performs scaling and clipping appropriate to the required view and output device, and expresses the object in terms appropriate to the output device (typically in terms of pixels by scan conversion or the like, for most types of display device or printer).

The shape processor 22 preferably includes an edge buffer which defines the shape of an object in terms of scan-converted pixels, and preferably applies anti-aliasing to the outline shape. Anti-aliasing is preferably performed in a manner determined by the characteristics of the output device 26 (i.e. on the basis of the control input 44), by applying a grey-scale ramp across the object boundary. This approach enables memory efficient shape-clipping and shape-intersection processes.

A look-up table may be employed to define multiple tone response curves, allowing non-linear rendering control (gamma correction).

The individual objects processed by the shape processor 22 are combined in the composite output frame 24. The quality of the final output can also be controlled by the user via the output control input 44.

The shape processor 22 has a multi-stage pipeline architecture which lends itself to parallel processing of multiple objects, or of multiple documents, or of multiple subsets of one or more document, by using multiple instances of the shape processor pipeline. The pipeline architecture is also easily modified to include additional processing functions (e.g. filter functions) if required. Outputs from multiple shape processors 22 may generate multiple output frames 24 or may be combined in a single output frame 24.

The system architecture is modular in nature. This enables, for example, further document agents to be added as and when required, to deal with additional source file formats. The modular architecture also allows individual modules such as the library 16, parser/renderer 18 or shape processor 22 to be modified or upgraded without requiring changes to other modules.

The system architecture as a whole also lends itself to parallelism in whole or in part for simultaneous processing of multiple input documents 10a, 10b etc. or subsets of documents, in one or more file formats, via one or more document agents 12, 12a. The integrated, modular nature of the system allows multiple instances of system modules to be spawned within a data processing system or device as and when required, limited only by available processing and memory resources.

The potential for flexible parallelism provided by the system as a whole and the shape processor 22 in particular allows the display path for a given device to be optimised for available bandwidth and memory. Display updates and animations may be improved, being quicker and requiring less memory. The object/parameter document model employed is deterministic and consistent. The system is fully scalable and allows multiple instances of the system across multiple CPUs.

The parser/renderer 18 and shape processor 22 interact dynamically in response to view control inputs 40, in a manner which optimises the use of available memory and bandwidth. This applies particularly to re-draw functions when driving a visual display, e.g. when the display is being scrolled or panned by a user.

Firstly, the system preferably implements a scalable deferred re-draw model, such that the display resolution of a document view, or of one or more objects within a view, varies dynamically according to the manner in which the display is to be modified. As previously mentioned, this might typically involve an object being displayed at reduced resolution whilst being moved on-screen and being displayed at full resolution when at rest. The system may employ multiple levels of display quality for this purpose. Typically, this will involve pre-built, low resolution bitmap representations of document objects and/or dynamically built and scaled bitmaps, with or without interpolation. This approach provides a highly responsive display which makes best use of available memory/bandwidth.

The interaction of the renderer/parser 18 and shape processor 22 preferably also involves dividing the page to be viewed into zones. Each zone has associated with it a list of all objects contained within or overlapping that zone. Re-draws can then be processed on the basis of the zones, so that the system need only process objects associated with the relevant zones affected by the re-draw. This approach facilitates parallel processing and improves efficiency and reduces redundancy. The use of zones also facilitates the use of the system to generate different outputs for different display devices (e.g. for generating a composite/mosaic output for display by an array of separate display screens).

The ability to process transparent objects is a significant feature of the system. However, this necessitates the use of off-screen buffering in the shape processor 22 in order to assemble a final output frame. Typically, an off-screen buffer will cover an area larger than the immediate display area, allowing a limited degree of panning/scrolling within the buffer area, but the entire buffer has to be re-centred and re-built when the required display moves outwith these limits. Preferably, the system improves the efficiency of such buffering processes by defining the buffer content as an array of tiles, indexed in an ordered list. When the required display view moves outwith the buffer area, it is then only necessary to discard those tiles which are no longer required, build new tiles to cover the new area of the display and update the tile list. This is faster and more efficient than conventional buffering processes and facilitates the use of multiple buffering and off-screen caching. It also facilitates interruptable re-draw functions (e.g. so that a current re-draw may be interrupted and a new re-draw initiated in response to user input).

The zoning and tiling schemes described above are independent in principle but may be combined advantageously; i.e. zones may correlate with one or more tiles. Again this facilitates parallelism and optimises use of system resources.

The system preferably employs a device-independent colour model, suitably a luminance/chrominance model such as the CIE L*a*b* 1976 model. This reduces redundancy in graphic objects, improves data compressibility and improves consistency of colour output between different output devices. Device-dependent colour correction can be applied on the basis of the device-dependent control input 44 to the shape processor 22.

Fig. 3 shows the system having an input end at which the source bytestream is received and an output end where the final output frame 24 is output from the system. However, it will be understood that the system may include intermediate inputs and outputs at other intermediate stages, such as for fetching data content or for saving/converting data generated in the course of the process.

The system 8 may be incorporated into a variety of types of data processing systems and devices, and into peripheral devices, in a number of different ways.

In a general purpose data processing system (the "host system"), the system of the present invention may be incorporated alongside the operating system and applications of the host system or may be incorporated fully or partially into the host operating system.

For example, the system of the present invention enables rapid display of a variety of types of data files on portable data processing devices with LCD displays without requiring the use of browsers or application programs. This class of data processing devices requires small size, low power processors for portability. Typically, this requires the use of advanced RISC-type core processors designed into ASICs (application specific integrated circuits), in order that the electronics package is as small and highly integrated as possible. This type of device also has limited random access memory and typically has no non-volatile data store (e.g. hard disk).

Conventional operating system models, such as are employed in standard desktop computing systems (PCs), require high powered central processors and large amounts of memory in order to process digital documents and generate useful output, and are entirely unsuited for this type of data processing device. In particular, conventional systems do not provide for the processing of multiple file formats in an integrated manner. By contrast, the present invention utilises common processes and pipelines for all file formats, thereby providing a highly integrated document processing system which is extremely efficient in terms of power consumption and usage of system resources.

The system of the present invention may be integrated at the BIOS level of portable data processing devices to enable document processing and output with much lower overheads than conventional system models. Alternatively, the invention may be implemented at the lowest system level just above the transport protocol stack. For example, the system may be incorporated into a network device (card) or system, to provide in-line processing of network traffic (e.g. working at the packet level in a TCP/IP system).

In a particular device, the system of the invention is configured to operate with a predetermined set of data file formats and particular output devices; e.g. the visual display unit of the device and/or at least one type of printer.

Examples of portable data processing devices which may employ the present system include "palmtop" computers, portable digital assistants (PDAs, including tablet-type PDAs in which the primary user interface comprises a graphical display with which the user interacts directly by means of a stylus device), internet-enabled mobile telephones and other communications devices, etc.

The system may also be incorporated into low cost data processing terminals such as enhanced telephones and "thin" network client terminals (e.g. network terminals with limited local processing and storage resources), and "set-top boxes" for use in interactive/internet-enabled cable TV systems.

When integrated with the operating system of a data processing system, the system of the present invention may also form the basis of a novel graphical user interface (GUI) for the operating system (OS). Documents processed and displayed by the system may include interactive features such as menus, buttons, icons etc. which provide the user interface to the underlying functions of the operating system. By extension, a complete OS/GUI may be expressed, processed and displayed in terms of system "documents". The OS/GUI could comprise a single document with multiple "chapters".

The system enables and/or facilitates a variety of novel and/or enhanced GUI features, including, but not limited to, the following:
- The use of thumbnail images of documents for navigation purposes and for recording user activities (history); e.g. when browsing network content.
- Document interaction functions and gesture-based commands using pointing devices and/or touch-screen technology; e.g.:
   allowing document interaction by means of gestures analogous to actions used with physical documents or books, such as dragging a pointer across a page in order to turn the page ("page-flipping"), dragging a pointer to curl back the corner of a page to view underlying parts of succeeding pages ("page curl");
   allowing tool selection by dragging tools from toolbars and de-selection by dragging tools to predetermined parts of the display;
   symbolic cursor movements to indicate particular OS commands, such as "tick", "cross-out" and "circle" movements for "OK", "delete" and "select"; editing commands based on conventional "proof-readers" notation;
- Re-formatting document views by rotation or switching between landscape and portrait formats;
- Utilities and tools such as:
   a floating virtual "magnifying glass" which magnifies the underlying document area, in which the magnified view is based on the internal representation 14 of the source document rather than on a bitmap representation of the document and which may modify document parameters such as background and/or foreground colours;
   a floating virtual, translucent keyboard for text input using a pointing device/touch screen;
   a floating, virtual, translucent ruler which is re-scalable using any of a variety of user-selectable units.
- Alternative menu or "tabbed page" drag out/pull down functions.
- Simulation of physical inertia/momentum applied to page scrolling/panning functions (e.g. when a zoomed display of a page is dragged to scroll the display and released, the moving display decelerates gradually after release).

GUI features of this type provide new or enhanced functionality and/or improve the subjective quality of the user interface.

The system of the present invention may also be incorporated into peripheral devices such as hardcopy devices (printers and plotters), display devices (such as digital projectors), networking devices, input devices (cameras, scanners etc.) and also multi-function peripherals (MFPs).

When incorporated into a printer, the system enables the printer to receive raw data files from the host data processing system and to reproduce the content of the original data file correctly, without the need for particular applications or drivers provided by the host system. This avoids the need to configure a computer system to drive a particular type of printer. The present system directly generates a dot-mapped image of the source document suitable for output by the printer (this is true whether the system is incorporated into the printer itself or into the host system). Similar considerations apply to other hardcopy devices such as plotters.

When incorporated into a display device, such as a projector, the system again enables the device to display the content of the original data file correctly without the use of applications or drivers on the host system, and without the need for specific configuration of the host system and/or display device. Peripheral devices of these types, when equipped with the present system, may receive and output data files from any source, via any type of data communications network.

From the foregoing, it will be understood that the system of the present invention may be "hard-wired; e.g. implemented in ROM and/or integrated into ASICs or other single-chip systems, or may be implemented as firmware (programmable ROM such as flashable ePROM), or as software, being stored locally or remotely and being fetched and executed as required by a particular device.

Improvements and modifications may be incorporated without departing from the scope of the present invention as defined in the accompanying claims.

## Claims

1. A digital document processing system (8) adapted for receiving an input bytestream representing source data (10,10a,10b) in any one of a plurality of predetermined data formats, said data formats including but not limited to structured document data formats exemplified by HTML, VRML, SGML and XML, and for processing said input bytestream so as to generate output representation data (24) adapted to drive an output device (26); said system comprising:
means (11) for receiving said input bytestream representing said source data (10,10a,10b);
interpreting means (11,12) for interpreting said bytestream;
converting means (12) for converting interpreted content from said bytestream in any one of said plurality of predetermined data formats into a standard internal representation data format (14) native to the system;
means (18,22) for processing said internal representation data (14) so as to generate said output representation data (24) adapted to drive said output device (26); wherein:
said source data (10,10a,10b) defines the content and structure of a digital document, and said internal representation data (14) describes said structure in terms of generic objects defining a plurality of data types and parameters defining properties of specific instances of generic objects, separately from said content;
said means (11,12) for receiving and interpreting said bytestream is adapted to receive said source data in any one of said plurality of predetermined data formats, identify the data format of the source data and interpret the bytestream on the basis of said identification of the source data format; and
said means (18,22) for processing said internal representation data include a parsing and rendering module (18) adapted to generate output representation data of specific views (20) of at least part of said internal representation data (14), including zoomed, panned and scrolled views, on the basis of a view control input (40) to said parsing and rendering module, said view control input (40) being interpreted by the parsing and rendering module (18) in order to determine which parts of the internal representation are required for a particular view.

2. A digital document processing system as claimed in claim 1, wherein the interpreting means (11,12) comprises a plurality of document agents (12), wherein at least one document agent (12) is provided to correspond to each of the predetermined data formats.

3. A digital document processing system as claimed in claim 1 or claim 2, wherein:
said means (11) for receiving an input bytestream comprises an input module (11) and said bytestream contains information representative of a visual image;
said interpreting means and converting means (12) comprises an interpreting module for generating said internal representation of said visual image; and
said means (18,22) for processing the internal representation comprises a rendering engine for generating an output data stream suitable for driving said output device (26) to present the visual image.

4. A system as claimed in Claim 3, wherein said input module (11) includes a process for monitoring a data stream and for identifying files in any of the formats from the set consisting of HTML, XML, PDF, DOC, RM, VRML and SGML.

5. A system as claimed in any preceding Claim, further including a library (16) of generic object types, said internal representation data (14) being based on the content of said library.

6. A system as claimed in any preceding Claim, wherein said parsing and rendering module (18) is adapted to generate an object and parameter based representation (20) of a specific view of at least part of said internal representation data, on the basis of said view control input (40) to said parsing and rendering module.

7. A system as defined in Claim 6, further including a shape processing module (22) adapted to receive said object and parameter based representation (20) of said specific view from said parsing and rendering module and to convert said object and parameter based representation (20) into an output data format (24) suitable for driving a particular output device (26).

8. A system as claimed in Claim 7, wherein said shape processing module (22) processes said objects on the basis of a boundary box defining the boundary of an object, a shape defining the actual shape of the object bounded by the boundary box, the data content of the object and the transparency of the object.

9. A system as claimed in Claim 8, wherein said shape processor (22) is adapted to apply grey-scale anti-aliasing to the edges of said objects.

10. A system as claimed in Claim 7, Claim 8 or Claim 9, wherein said shape processing module (22) has a pipeline architecture.

11. A system as claimed in any one of Claims 7 to 10, wherein said shape processing module (22) employs at least one off-screen display buffer to generate said output data and wherein said at least one off-screen display buffer is defined by an indexed array of tiles.

12. A system as defined in Claim 11, wherein updating of the content of said at least one off-screen display buffer is performed by removing selected tiles from said array, adding new tiles to said array, and up-dating the indexing of said tiles.

13. A system as claimed in any one of Claims 7 to 12 wherein said parsing and rendering module (18) is adapted to define at least part of said internal representation data (14) in terms of a plurality of zones, each zone having an associated list of objects contained within and overlapping said zone, and said shape processor is adapted to process said object and parameter based representation on the basis of said zones and associated lists.

14. A system as claimed in any one of Claims 7 to 13, wherein the quality of a display view represented by said output data (24) may be varied dependent on said view control input (40).

15. A system as claimed in Claim 14, wherein the quality of said display view may be varied in multiple steps.

16. A system as claimed in any one of Claims 4 to 14, wherein said object parameters include dimensional, physical and temporal parameters.

17. A system as claimed in any preceding Claim, wherein the system employs a chrominance/luminance-based colour model to describe colour data.

18. A system as claimed in any preceding Claim, wherein the system is adapted for multiple parallel implementation in whole or in part for processing one or more sets of source data from one or more data sources and for generating one or more sets of output representation data.

19. A graphical user interface for a data processing system in which interactive visual displays employed by the user interface are generated by means of a digital document processing system as claimed in any one of Claims 1 to 18.

20. A data processing device incorporating a graphical user interface as claimed in Claim 19.

21. A hardware device for data processing and/or storage, said hardware device encoding a digital document processing system as claimed in any one of Claims 1 to 18.

22. A hardware device as claimed in Claim 21, further including a core processor system.

23. A hardware device as claimed in Claim 22, wherein said core processor is a RISC processor.

24. A data processing system including a digital document processing system as claimed in any one of Claims 1 to 18.

25. A data processing system as claimed in Claim 24, wherein said data processing system comprises a portable data processing device.

26. A data processing system as claimed in Claim 25, wherein said portable data processing device comprises a wireless telecommunications device.

27. A data processing system as claimed in Claim 24, wherein said data processing system comprises a network user-terminal.

28. A peripheral device for use with a data processing system, including a digital document processing system as claimed in any one of Claims 1 to 18.

29. A peripheral device as claimed in Claim 28, wherein said peripheral device is a visual display device.

30. A peripheral device as claimed in Claim 28, wherein said peripheral device is a hardcopy output device.

31. A peripheral device as claimed in Claim 28, wherein said peripheral device is an input device.

32. A peripheral device as claimed in Claim 28, wherein said peripheral device is a network device.

33. A peripheral device as claimed in Claim 28, wherein said peripheral device is a multi-function peripheral device.

34. A system as claimed in any of claims 1 to 18 or 24 to 27, or a device as claimed in any one of claims 20 to 23 or 28 to 33, incorporating a graphical user interface including at least one of the following features:
- the use of thumbnail images of documents for navigation purposes and for recording user activities;
- document interaction functions and gesture-based commands using pointing devices and/or touch-screen technology, including document interaction by means of gestures analogous to actions used with physical documents or books;
- tool selection by dragging tools from toolbars and de-selection by dragging tools to predetermined parts of the display;
- symbolic cursor movements to indicate commands;
- re-formatting document views by rotation or switching between landscape and portrait formats;
- alternative menu or "tabbed page" drag out/pull down functions.
- simulated physical inertia/momentum applied to page scrolling/panning functions.

35. A system as claimed in any of claims 1 to 18 or 24 to 27, or a device as claimed in any one of claims 20 to 23 or 28 to 33, incorporating a graphical user interface including at least one of the following utilities/tools:
- a floating virtual magnifying glass adapted to magnify an underlying document area, in which the magnified view is based on source document data;
- a floating virtual, translucent keyboard for text input using a pointing device/touch screen;
- a floating, virtual, translucent ruler which is re-scalable using any of a variety of user-selectable units.

## Patentansprüche

1. Ein Digitaldokumentverarbeitungssystem (8), das zum Empfangen eines Eingabebytestroms, der Ursprungsdaten (10, 10a, 10b) in irgendeinem aus einer Vielzahl von vorbestimmten Datenformaten darstellt, angepasst ist, wobei die Datenformate strukturierte Dokumentdatenformate umfassen, die beispielsweise durch HTML, VRML, SGML und XML dargestellt sind, aber darauf nicht beschränkt sind, und zum Verarbeiten des Eingabebytestroms, so dass Ausgabedarstellungsdaten (24), die zum Ansteuern einer Ausgabevorrichtung (26) angepasst sind, erzeugt werden; wobei das System Folgendes beinhaltet:
ein Mittel (11) zum Empfangen des Eingabebytestroms, der die Ursprungsdaten (10, 10a, 10b) darstellt;
ein Interpretiermittel (11, 12) zum Interpretieren des Bytestroms;
ein Konvertiermittel (12) zum Konvertieren von interpretiertem Inhalt aus dem Bytestrom in irgendeinem aus einer Vielzahl von vorbestimmten Datenformaten in ein Standard-Datenformat zur internen Darstellung (14), das systemspezifisch ist;
ein Mittel (18, 22) zur Verarbeitung der Daten (14) zur internen Darstellung, um die Ausgabedarstellungsdaten (24) zu erzeugen, die zum Ansteuern der Ausgabevorrichtung (26) angepasst sind; wobei:
die Ursprungsdaten (10, 10a, 10b) den Inhalt und die Struktur eines Digitaldokuments festlegen, und die Daten (14) zur internen Darstellung die Struktur hinsichtlich generischer Objekte, welche eine Vielzahl von Datentypen festlegen, und Parameter, welche Eigenschaften spezifischer Fälle von generischen Objekten getrennt von dem Inhalt festlegen, beschreiben;
das Mittel (11, 12) zum Empfangen und Interpretieren des Bytestroms zum Empfangen der Ursprungsdaten in irgendeinem aus der Vielzahl von vorbestimmten Datenformaten, zum Identifizieren des Datenformats der Ursprungsdaten und zum Interpretieren des Bytestroms auf der Basis der Identifikation des Ursprungsdatenformats angepasst ist; und
das Mittel (18, 22) zur Verarbeitung der Daten zur internen Darstellung ein Analyse- und Bildaufbereitungsmodul (18) umfasst, das zum Erzeugen von Ausgabedarstellungsdaten von spezifischen Ansichten (20) von mindestens einem Teil der Daten (14) zur internen Darstellung, die gezoomte, geschwenkte und verschobene Ansichten umfassen, angepasst ist, auf der Basis einer Ansichtssteuerungseingabe (40) in das Analyse- und Bildaufbereitungsmodul, wobei die Ansichtssteuerungseingabe (40) durch das Analyse- und Bildaufbereitungsmodul (18) interpretiert wird, um zu bestimmen, welche Teile der internen Darstellung für eine bestimmte Ansicht benötigt werden.

2. Digitaldokumentverarbeitungssystem gemäß Anspruch 1, wobei das Interpretiermittel (11, 12) eine Vielzahl von Dokument-Agenten (12) beinhaltet, wobei mindestens ein Dokument-Agent (12) bereitgestellt ist, um jedem der vorbestimmten Datenformate zu entsprechen.

3. Digitaldokumentverarbeitungssystem gemäß Anspruch 1 oder Anspruch 2, wobei:
das Mittel (11) zum Empfangen eines Eingabebytestroms ein Eingabemodul (11) beinhaltet und der Bytestrom Informationen, die ein visuelles Bild darstellen, enthält;
das Interpretiermittel und das Konvertiermittel (12) ein Interpretiermodul zum Erzeugen der internen Darstellung des visuellen Bilds beinhalten; und
das Mittel (18, 22) zur Verarbeitung der internen Darstellung eine Bildaufbereitungsmaschine zum Erzeugen eines Ausgabedatenstroms beinhaltet, der zum Ansteuern der Ausgabevorrichtung (26), um das visuelle Bild aufzuzeigen, geeignet ist.

4. System gemäß Anspruch 3, wobei das Eingabemodul (11) einen Prozess zum Überwachen eines Datenstroms und zum Identifizieren von Dateien in beliebigen Formaten aus dem Satz, bestehend aus HTML, XML, PDF, DOC, RM, VRML und SGML, umfasst.

5. System gemäß einem der vorhergehenden Ansprüche, das ferner eine Bibliothek (16) von Typen generischer Objekte umfasst, wobei die Daten (14) zur internen Darstellung auf dem Inhalt der Bibliothek basieren.

6. System gemäß einem der vorhergehenden Ansprüche, wobei das Analyse- und Bildaufbereitungsmodul (18) zum Erzeugen einer auf Objekten und Parametern basierende Darstellung (20) einer spezifischen Ansicht von mindestens einem Teil der Daten zur internen Darstellung angepasst ist, auf der Basis der Ansichtssteuerungseingabe (40) in das Analyse- und Bildaufbereitungsmodul.

7. System gemäß Anspruch 6, das ferner ein Formverarbeitungsmodul (22) umfasst, das zum Empfangen der auf Objekten und Parametern basierenden Darstellung (20) der spezifischen Ansicht vom Analyse- und Bildaufbereitungsmodul und zum Konvertieren der auf Objekten und Parametern basierenden Darstellung (20) in ein Ausgabedatenformat (24), das für das Ansteuern einer bestimmten Ausgabevorrichtung (26) geeignet ist, angepasst ist.

8. System gemäß Anspruch 7, wobei das Formverarbeitungsmodul (22) die Objekte auf der Basis einer Grenzbox, die die Grenze eines Objektes festlegt, einer Form, die die eigentliche Form des durch die Grenzbox eingegrenzten Objekts festlegt, des Dateninhalts des Objekts und der Transparenz des Objekts verarbeitet.

9. System gemäß Anspruch 8, wobei der Formprozessor (22) zum Anwenden der Graustufen-Bildglättung auf die Kanten der Objekte angepasst ist.

10. System gemäß Anspruch 7, Anspruch 8 oder Anspruch 9, wobei das Formverarbeitungsmodul (22) eine Fließbandarchitektur aufweist.

11. System gemäß einem der Ansprüche 7 bis 10, wobei das Formverarbeitungsmodul (22) mindestens einen Anzeigepuffer für nicht angezeigte Daten (off-screen display buffer) zum Erzeugen der Ausgabedaten verwendet, und wobei der mindestens eine Anzeigepuffer für nicht angezeigte Daten (off-screen display buffer) durch eine indizierte Fliesengruppe festgelegt wird.

12. System gemäß Anspruch 11, wobei das Aktualisieren des Inhalts des mindestens einen Anzeigepuffers für nicht angezeigte Daten (off-screen display buffer) durchgeführt wird, indem ausgewählte Fliesen aus der Gruppe entfernt werden, neue Fliesen zu der Gruppe hinzugefügt werden und die Indizierung der Fliesen aktualisiert wird.

13. System gemäß einem der Ansprüche 7 bis 12, wobei das Analyse- und Bildaufbereitungsmodul (18) zum Festlegen von mindestens einem Teil der Daten (14) zur internen Darstellung hinsichtlich einer Vielzahl von Gebieten angepasst ist, wobei jedes Gebiet eine zugeordnete Liste von Objekten aufweist, die innerhalb des Gebiets enthalten sind und die das Gebiet überlappen, und der Formprozessor zum Verabeiten der auf Objekten und Parametern basierenden Darstellung auf der Basis der Gebiete und zugeordneten Listen angepasst ist.

14. System gemäß einem der Ansprüche 7 bis 13, wobei die Qualität einer durch die Ausgabedaten (24) dargestellten Anzeigenansicht abhängig von der Ansichtssteuerungseingabe (40) variiert werden kann.

15. System gemäß Anspruch 14, wobei die Qualität der Anzeigenansicht in mehreren Schritten variiert werden kann.

16. System gemäß einem der Ansprüche 4 bis 14, wobei die Objektparameter dimensionale, physikalische und zeitliche Parameter umfassen.

17. System gemäß einem der vorhergehenden Ansprüche, wobei das System ein Farbmodell auf Chrominanz-/Luminanzbasis verwendet, um die Farbdaten zu beschreiben.

18. System gemäß einem der vorhergehenden Ansprüche, wobei das System zur mehrfachen parallelen Implementierung im Ganzen oder im Teil, um einen oder mehrere Sätze von Ursprungsdaten aus einer oder mehreren Datenquellen zu verarbeiten, und zum Erzeugen eines oder mehrerer Sätze von Ausgabedarstellungsdaten angepasst ist.

19. Eine grafische Benutzeroberfläche für ein Datenverarbeitungssystem, wobei von der Benutzeroberfläche verwendete interaktive visuelle Anzeigen mittels eines Digitaldokumentverarbeitungssystems gemäß einem der Ansprüche 1 bis 18 erzeugt werden.

20. Eine Datenverarbeitungsvorrichtung, die eine grafische Benutzeroberfläche gemäß Anspruch 19 einbezieht.

21. Eine Hardwarevorrichtung zur Datenverarbeitung und/oder -speicherung, wobei die Hardwarevorrichtung ein Digitaldokumentverarbeitungssystem gemäß einem der Ansprüche 1 bis 18 codiert.

22. Hardwarevorrichtung gemäß Anspruch 21, die ferner ein Kernprozessorsystem umfasst.

23. Hardwarevorrichtung gemäß Anspruch 22, wobei der Kernprozessor ein RISC-Prozessor ist.

24. Ein Datenverarbeitungssystem, das ein Digitaldokumentverarbeitungssystem gemäß einem der Ansprüche 1 bis 18 umfasst.

25. Datenverarbeitungssystem gemäß Anspruch 24, wobei das Datenverarbeitungssystem eine tragbare Datenverarbeitungsvorrichtung beinhaltet.

26. Datenverarbeitungssystem gemäß Anspruch 25, wobei die tragbare Datenverarbeitungsvorrichtung eine drahtlose Telekommunikationsvorrichtung beinhaltet.

27. Datenverarbeitungssystem gemäß Anspruch 24, wobei das Datenverarbeitungssystem eine Netzwerkbenutzerstation beinhaltet.

28. Ein Peripheriegerät zur Benutzung mit einem Datenverarbeitungssystem, einschließlich eines Digitaldokumentverarbeitungssystem gemäß einem der Ansprüche 1 bis 18.

29. Peripheriegerät gemäß Anspruch 28, wobei das Peripheriegerät eine visuelle Anzeigevorrichtung ist.

30. Peripheriegerät gemäß Anspruch 28, wobei das Peripheriegerät eine Ausgabevorrichtung für Papierkopien ist.

31. Peripheriegerät gemäß Anspruch 28, wobei das Peripheriegerät eine Eingabevorrichtung ist.

32. Peripheriegerät gemäß Anspruch 28, wobei das Peripheriegerät eine Netzwerkvorrichtung ist.

33. Peripheriegerät gemäß Anspruch 28, wobei das Peripheriegerät ein multifunktionales Peripheriegerät ist.

34. System gemäß einem der Ansprüche 1 bis 18 oder 24 bis 27 oder eine Vorrichtung gemäß einem der Ansprüche 20 bis 23 oder 28 bis 33, das/die eine grafische Benutzeroberfläche, die mindestens eines der folgenden Merkmale umfasst, einbezieht:
- Benutzen von Layout-Struktur-Bildern von Dokumenten für Navigationszwecke und zum Aufnehmen von Benutzeraktivitäten;
- Dokumentinteraktionsfunktionen und auf Gestik basierende Befehle, die Zeigervorrichtungen und/oder Berührungsbildschirmtechnologie benutzen, einschließlich Dokumentinteraktion mittels Gestik, die analog zu bei physikalischen Dokumenten oder Büchern benutzten Aktionen sind;
- Werkzeugauswahl durch Ziehen von Werkzeugen von Werkzeugleisten und Werkzeugabwahl durch Ziehen von Werkzeugen zu vorbestimmten Teilen der Anzeige;
- symbolische Cursorbewegungen zum Angeben von Befehlen;
- Umformen von Dokumentansichten, indem zwischen Quer- und Hochformat gedreht or geschaltet wird;
- alternative Funktionen zum Hervorziehen/Pull-down von Befehlsübersicht oder "Seiten mit Tab";
- simulierte physikalische Trägheit/simuliertes physikalisches Moment, die/das auf Seitenverschiebe-/Schwenkfiunktionen angewendet wird.

35. System gemäß einem der Ansprüche 1 bis 18 oder 24 bis 27 oder eine Vorrichtung gemäß einem der Ansprüche 20 bis 23 oder 28 bis 33, das/die eine grafische Benutzeroberfläche, die mindestens eines der folgenden Hilfsmittel/Werkzeuge umfasst, einbezieht:
- ein gleitendes virtuelles Vergrößerungsglas, das zum Vergrößern eines darunterliegenden Dokumentbereichs angepasst ist, wobei die vergrößerte Ansicht auf Ursprungsdokumentdaten basiert;
- eine gleitende virtuelle transluzente Tastatur zur Texteingabe mittels einer Zeigervorrichtung/eines Berührungsbildschirms;
- ein gleitendes virtuelles transluzentes Lineal, dessen Maßstab unter Benutzung einer Vielfalt von benutzerauswählbaren Einheiten neu eingestellt werden kann.

## Revendications

1. Un système de traitement de documents numériques (8) adapté pour recevoir un flot d'octets d'entrée représentant des données source (10, 10a, 10b) dans un format quelconque parmi une pluralité de formats de données prédéterminés, lesdits formats de données comprenant sans toutefois y être limités des formats de données de documents structurés exemplifiés par HTML, VRML, SGML et XML, et pour traiter ledit flot d'octets d'entrée de manière à générer des données de représentation de sortie (24) adaptées pour piloter un dispositif de sortie (26) ; ledit système comportant :
un moyen (11) destiné à recevoir ledit flot d'octets d'entrée représentant lesdites données source (10, 10a, 10b) ;
un moyen d'interprétation (11, 12) destiné à interpréter ledit flot d'octets ;
un moyen de conversion (12) destiné à convertir du contenu interprété provenant dudit flot d'octets dans un format quelconque parmi ladite pluralité de formats de données prédéterminés en un format de données de représentation interne standard (14) natif au système ;
un moyen (18, 22) destiné à traiter lesdites données de représentation interne (14) de manière à générer lesdites données de représentation de sortie (24) adaptées pour piloter ledit dispositif de sortie (26) ; dans lequel :
lesdites données source (10, 10a, 10b) définissent le contenu et la structure d'un document numérique, et lesdites données de représentation interne (14) décrivent ladite structure en termes d'objets génériques définissant une pluralité de types de données et de paramètres définissant des propriétés de cas spécifiques d'objets génériques, indépendamment dudit contenu ;
ledit moyen (11, 12) destiné à recevoir et interpréter ledit flot d'octets est adapté pour recevoir lesdites données source dans un format quelconque parmi ladite pluralité de formats de données prédéterminés, identifier le format de données des données source et interpréter le flot d'octets sur la base de ladite identification du format de données source ; et
ledit moyen (18, 22) destiné à traiter lesdites données de représentation interne comprend un module d'analyse syntaxique et de rendu (18) adapté pour générer des données de représentation de sortie de vues spécifiques (20) d'au moins une partie desdites données de représentation interne (14), y compris des vues zoomée, panoramiquée et en défilement, sur la base d'une entrée de commande de vue (40) dans ledit module d'analyse syntaxique et de rendu, ladite entrée de commande de vue (40) étant interprétée par le module d'analyse syntaxique et de rendu (18) afin de déterminer quelles parties de la représentation interne sont requises pour une vue particulière.

2. Un système de traitement de documents numériques tel que revendiqué dans la revendication 1, dans lequel le moyen d'interprétation (11, 12) comporte une pluralité d'agents de document (12), dans lequel au moins un agent de document (12) est fourni pour correspondre à chacun des formats de données prédéterminés.

3. Un système de traitement de documents numériques tel que revendiqué dans la revendication 1 ou la revendication 2, dans lequel :
ledit moyen (11) destiné à recevoir un flot d'octets d'entrée comporte un module d'entrée (11) et ledit flot d'octets contient des informations représentatives d'une image visuelle ;
ledit moyen d'interprétation et ledit moyen de conversion (12) comportent un module d'interprétation pour générer ladite représentation interne de ladite image visuelle ; et
ledit moyen (18, 22) destiné à traiter la représentation interne comporte un moteur de rendu pour générer un flot de données de sortie adéquates pour piloter ledit dispositif de sortie (26) afin qu'il présente l'image visuelle.

4. Un système tel que revendiqué dans la revendication 3, dans lequel ledit module d'entrée (11) comprend un processus destiné à monitorer un flot de données et à identifier des fichiers dans n'importe lesquels des formats provenant de l'ensemble consistant en HTML, XML, PDF, DOC, RM, VRML et SGML.

5. Un système tel que revendiqué dans n'importe quelle revendication précédente, comprenant de plus une bibliothèque (16) de types d'objets génériques, lesdites données de représentation interne (14) étant basées sur le contenu de ladite bibliothèque.

6. Un système tel que revendiqué dans n'importe quelle revendication précédente, dans lequel ledit module d'analyse syntaxique et de rendu (18) est adapté pour générer une représentation basée sur des objets et des paramètres (20) d'une vue spécifique d'au moins une partie desdites données de représentation interne, sur la base de ladite entrée de commande de vue (40) dans ledit module d'analyse syntaxique et de rendu.

7. Un système tel que défini dans la revendication 6, comprenant en outre un module de traitement de forme (22) adapté pour recevoir ladite représentation basée sur des objets et des paramètres (20) de ladite vue spécifique provenant dudit module d'analyse syntaxique et de rendu et pour convertir ladite représentation basée sur des objets et des paramètres (20) en un format de données de sortie (24) adéquat pour piloter un dispositif de sortie particulier (26).

8. Un système tel que revendiqué dans la revendication 7, dans lequel ledit module de traitement de forme (22) traite lesdits objets sur la base d'un cadre limite définissant la limite d'un objet, d'une forme définissant la forme réelle de l'objet délimité par le cadre limite, du contenu de données de l'objet et de la transparence de l'objet.

9. Un système tel que revendiqué dans la revendication 8, dans lequel ledit processeur de forme (22) est adapté pour appliquer un anticrénelage en niveaux de gris sur les bords desdits objets.

10. Un système tel que revendiqué dans la revendication 7, la revendication 8 ou la revendication 9, dans lequel ledit module de traitement de forme (22) a une architecture pipeline.

11. Un système tel que revendiqué dans n'importe laquelle des revendications 7 à 10, dans lequel ledit module de traitement de forme (22) emploie au moins un tampon d'affichage hors-écran pour générer lesdites données de sortie et dans lequel ledit au moins un tampon d'affichage hors-écran est défini par un arrangement indexé de mosaïques.

12. Un système tel que défini dans la revendication 11, dans lequel la mise à jour du contenu dudit au moins un tampon d'affichage hors-écran est effectuée en retirant des mosaïques sélectionnées dudit arrangement, en ajoutant de nouvelles mosaïques audit arrangement, et en mettant à jour l'indexation desdites mosaïques.

13. Un système tel que revendiqué dans n'importe laquelle des revendications 7 à 12, dans lequel ledit module d'analyse syntaxique et de rendu (18) est adapté pour définir au moins une partie desdites données de représentation interne (14) en termes d'une pluralité de zones, chaque zone ayant une liste associée d'objets contenus au sein de ladite zone et chevauchant celle-ci, et ledit processeur de forme est adapté pour traiter ladite représentation basée sur des objets et des paramètres sur la base desdites zones et listes associées.

14. Un système tel que revendiqué dans n'importe laquelle des revendications 7 à 13, dans lequel la qualité d'une vue d'affichage représentée par lesdites données de sortie (24) peut être amenée à varier en fonction de ladite entrée de commande de vue (40).

15. Un système tel que revendiqué dans la revendication 14, dans lequel la qualité de ladite vue d'affichage peut être amenée à varier par étapes multiples.

16. Un système tel que revendiqué dans n'importe laquelle des revendications 4 à 14, dans lequel lesdits paramètres d'objets comprennent des paramètres dimensionnels, physiques et temporels.

17. Un système tel que revendiqué dans n'importe quelle revendication précédente, dans lequel le système emploie un modèle de couleurs basé sur la chrominance/luminance pour décrire des données de couleur.

18. Un système tel que revendiqué dans n'importe quelle revendication précédente, dans lequel le système est adapté pour une mise en oeuvre parallèle multiple totale ou partielle pour traiter un ou plusieurs ensembles de données source provenant d'une ou de plusieurs sources de données et pour générer un ou plusieurs ensembles de données de représentation de sortie.

19. Une interface utilisateur graphique destinée à un système de traitement de données dans lequel des affichages visuels interactifs employés par l'interface utilisateur sont générés au moyen d'un système de traitement de documents numériques tel que revendiqué dans n'importe laquelle des revendications 1 à 18.

20. Un dispositif de traitement de données incorporant une interface utilisateur graphique telle que revendiquée dans la revendication 19.

21. Un dispositif matériel pour le traitement et/ou le stockage de données, ledit dispositif matériel encodant un système de traitement de documents numériques tel que revendiqué dans n'importe laquelle des revendications 1 à 18.

22. Un dispositif matériel tel que revendiqué dans la revendication 21, comprenant de plus un système processeur central.

23. Un dispositif matériel tel que revendiqué dans la revendication 22, dans lequel ledit processeur central est un processeur RISC.

24. Un système de traitement de données comprenant un système de traitement de documents numériques tel que revendiqué dans n'importe laquelle des revendications 1 à 18.

25. Un système de traitement de données tel que revendiqué dans la revendication 24, dans lequel ledit système de traitement de données comporte un dispositif de traitement de données portatif.

26. Un système de traitement de données tel que revendiqué dans la revendication 25, dans lequel ledit dispositif de traitement de données portatif comporte un dispositif de télécommunication sans fil.

27. Un système de traitement de données tel que revendiqué dans la revendication 24, dans lequel ledit système de traitement de données comporte un terminal-utilisateur de réseau.

28. Un dispositif périphérique destiné à être utilisé avec un système de traitement de données, comprenant un système de traitement de documents numériques tel que revendiqué dans n'importe laquelle des revendications 1 à 18.

29. Un dispositif périphérique tel que revendiqué dans la revendication 28, dans lequel ledit dispositif périphérique est un dispositif d'affichage visuel.

30. Un dispositif périphérique tel que revendiqué dans la revendication 28, dans lequel ledit dispositif périphérique est un dispositif de sortie papier.

31. Un dispositif périphérique tel que revendiqué dans la revendication 28, dans lequel ledit dispositif périphérique est un dispositif d'entrée.

32. Un dispositif périphérique tel que revendiqué dans la revendication 28, dans lequel ledit dispositif périphérique est un dispositif de réseau.

33. Un dispositif périphérique tel que revendiqué dans la revendication 28, dans lequel ledit dispositif périphérique est un dispositif périphérique multifonction.

34. Un système tel que revendiqué dans n'importe lesquelles des revendications 1 à 18 ou 24 à 27, ou un dispositif tel que revendiqué dans n'importe laquelle des revendications 20 à 23 ou 28 à 33, incorporant une interface utilisateur graphique comprenant au moins l'une des caractéristiques suivantes :
- l'utilisation de vignettes de documents à des fins de navigation et pour enregistrer les activités des utilisateurs ;
- des fonctions d'interaction avec le document et des instructions basées sur des gestes en utilisant des dispositifs de pointage et/ou la technologie à écran tactile, y compris l'interaction avec le document au moyen de gestes analogues à des actions utilisées avec des livres ou documents physiques ;
- la sélection d'outils en faisant glisser des outils depuis les barres d'outils et la désélection en faisant glisser les outils jusqu'à des parties prédéterminées de l'affichage ;
- des déplacements de curseur symboliques pour indiquer des instructions ;
- le reformatage de vues du document par rotation ou la commutation entre format paysage et format portrait ;
- des variantes de fonctions de déroulement/glissé-laché de « pages à onglet » ou de menus ;
- inertie/quantité de mouvement physique simulée appliquée aux fonctions de panoramique/défilement de page.

35. Un système tel que revendiqué dans n'importe lesquelles des revendications 1 à 18 ou 24 à 27, ou un dispositif tel que revendiqué dans n'importe laquelle des revendications 20 à 23 ou 28 à 33, incorporant une interface utilisateur graphique comprenant au moins un utilitaire/outil parmi les utilitaires/outils suivants :
- une loupe virtuelle flottante adaptée pour grossir une région de document sous-jacente, dans lequel la vue grossie est basée sur des données de document source ;
- un clavier translucide virtuel flottant pour l'entrée de texte à l'aide d'un dispositif de pointage/écran tactile ;
- une règle translucide virtuelle flottante qui peut être redimensionnée à l'aide d'une unité quelconque parmi une diversité d'unités sélectionnables par l'utilisateur.
